# EUROPEAN PATENT SPECIFICATION

(11) **EP 2 545 824 B1**
(45) Date of publication and mention of the grant of the patent: **04.06.2014**
(21) Application number: 12176617.4
(22) Date of filing: 16.07.2012
(51) Int. Cl.: A47J 31/42

(54) **COFFEE BEAN HOPPER**
Kaffeebohnentrichter
Trémie de café en grain

(30) Priority: 14.07.2011 IT TO20110618
(43) Date of publication of application: 16.01.2013
(73) Proprietor: N&W Global Vending S.p.A., Valbrembo (IT)
(72) Inventor: Colnago, Simone, 24129 Bergamo (IT)
(74) Representative: Bergadano, Mirko

(56) References cited:
- WO-A1-2004/098361
- GB-A- 2 298 148
- US-A- 4 971 259
- US-A- 5 458 295

## Description

The present invention relates to a coffee bean hopper.

Coffee-making or vending machines are known to be fitted, inside, partly inside, or outside the casing, with a coffee bean hopper of the type comprising a bottom funnel terminating in a discharge duct; a top wall; at least one top fill opening; and a lateral wall connecting the top wall to the funnel and comprising at least one transparent portion.

A prior art coffee bean hopper is for example described in document GB 2298148 A.

In known coffee bean hoppers, the transparent portion of the lateral wall is used to provide to the outside, at any time, a visible signal of the coffee bean level inside the hopper, but in many cases such signal proves ineffective since such a signal indicates a zero level when in actual fact a relatively large quantity, not visible from the outside, still remains inside the funnel.

Much more useful would be a perfected hopper of the type described, designed to provide a 'reserve' level indication, i.e. to allow service technicians and users to see from the outside when and by how much the coffee bean level inside the hopper has dropped below a given (reserve) level.

It is an object of the present invention to provide a hopper designed to indicate such a 'reserve' level.

According to the present invention, there is provided a coffee bean hopper as claimed in Claim 1 and preferably in any one of the Claims depending directly or indirectly on Claim 1.

A non-limiting embodiment of the present invention will be described by way of example with reference to the accompanying drawings, in which :

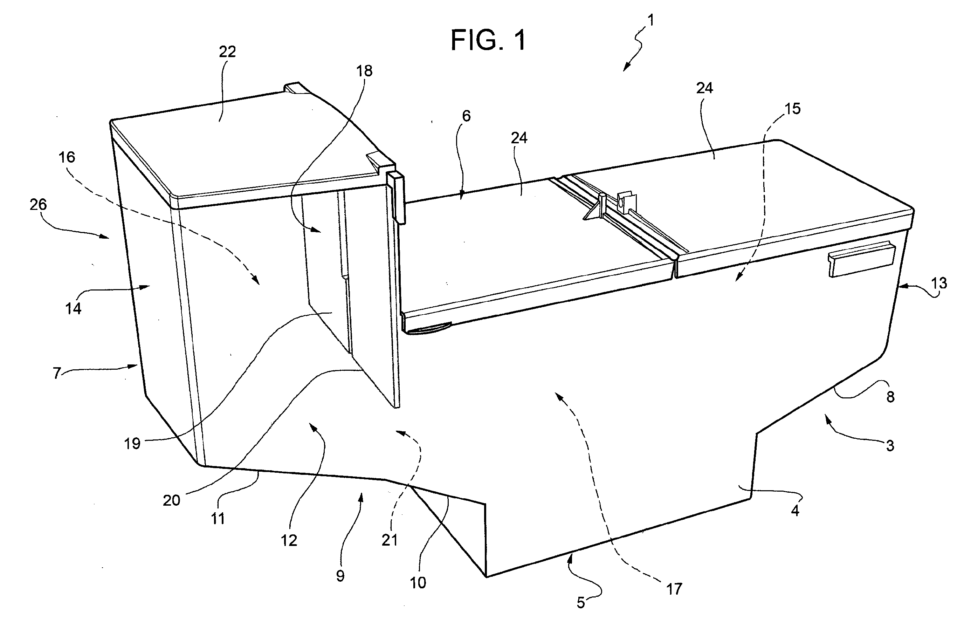

Figure 1 shows a view in perspective of a preferred embodiment of the coffee bean hopper according to the present invention;
Figures 2 to 4 show sections of the Figure 1 hopper in respective discharge conditions.

Number 1 in the attached drawings indicates as a whole a hopper for dispensing coffee beans 2, and which comprises a bottom funnel 3 with a stand 4 and terminating in a discharge duct 5 inside stand 4; a top wall 6; and a vertical lateral wall 7 connecting top wall 6 to funnel 3.

In the example shown, funnel 3, viewed from above, is substantially rectangular, and is defined by two sloping walls 8 and 9 converging towards, and connected to the inlet of, discharge duct 5.

Sloping wall 8 is shorter than sloping wall 9, and slopes, with respect to the horizontal, at a constant angle approximately equal to but no smaller than the 'coffee bean static friction angle' (normally about 22-25°), which here and hereinafter is intended to mean the half-angle at the vertex that a conical mass of coffee beans must not exceed for it to remain stable.

Sloping wall 9 on the other hand slopes at a non-constant angle, and is divided into a first portion 10 connected to discharge duct 5 and sloping at substantially the same angle as sloping wall 8; and a second portion 11 sloping at less than the coffee bean static friction angle.

Lateral wall 7 comprises two opposite flat longitudinal walls 12 on opposite sides of funnel 3; a flat transverse wall 13 extending upwards from the free top end of sloping wall 8; and a flat transverse wall 14 extending upwards from the free top end of sloping wall 9.

In the example embodiment shown, lateral wall 7 is made entirely of transparent material. This, however, is not strictly necessary, in that only transverse wall 14 or a strip of or adjacent to it need be transparent. In the following description, it is assumed only transverse wall 14 is transparent.

Funnel 3, lateral wall 7, and top wall 6 define an inner chamber 15 divided into two half-chambers 16 and 17 by a vertical partition 18, a bottom portion 19 of which projects inside chamber 15 from top wall 6 and parallel to transverse wall 14. Portion 19 of partition 18 is laterally integral with longitudinal walls 12, and has a free bottom edge 20 facing and parallel to an intermediate portion of portion 11 of sloping wall 9, so as to define, with portion 11 and between longitudinal walls 12, a substantially rectangular passage 21, which is shorter in height than bottom portion 19 of partition 18, and connects half-chamber 16, adjacent to transverse wall 14, to half-chamber 17 communicating with discharge duct 5.

Partition 18 divides top wall 6 into two portions: one defined by a lid 22 closing a fill opening 23 for filling half-chamber 16, and the other defined by two lids 24 closing a fill opening 25 for filling half-chamber 17.

Partition 18, transverse wall 14, and the part of each longitudinal wall 12 bounding half-chamber 16 project upwards above the level of lids 24 to form a turret 26 with opening 23 at the top and closed at the top by lid 22.

A variation not shown has no turret 26, and lid 22 is coplanar with lids 24.

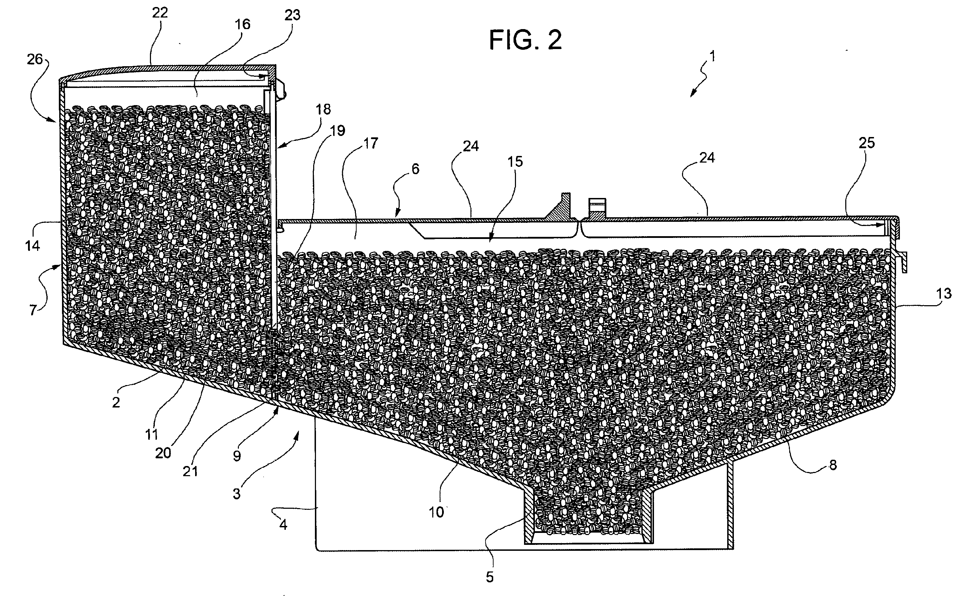

In actual use, chamber 15 (Figure 2) is first filled with coffee beans 2 through openings 23 and 25 or opening 23 only.

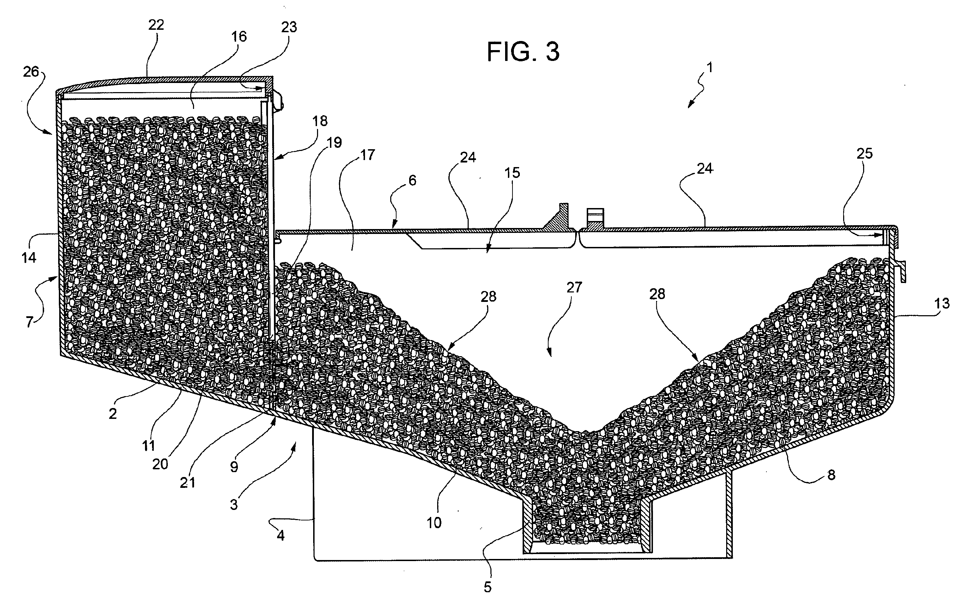

Because half-chamber 17 is connected directly to discharge duct 5, withdrawal of part of the coffee beans 2 through discharge duct 5 forms inside half-chamber 17 (Figure 3) a funnel-shaped void 27 with a downward-facing vertex and bounded by surfaces 28 sloping at an angle steeper than the bean static friction angle. So, as withdrawal continues, the beans 2 along surfaces 28 roll down to compensate for those drawn through discharge duct 5, while the beans 2 in half-chamber 16 are substantially unaffected.

This is due to the presence of portion 19 of partition 18, which prevents surfaces 28 from extending inside half-chamber 16. In addition, the mass of beans 2 at passage 21, not being affected directly by withdrawal through the discharge duct, and only being indirectly affected by the reduction in lateral thrust caused by the reduction in the mass of beans 2 inside half-chamber 17, tends to shift slightly and, as invariably happens, reorganize in a particulate mass into a minimum-potential-energy, i.e. substantially stable, bridge-like, configuration. In doing this, the mass of beans 2 at passage 21 is assisted by the low height of passage 21, and by portion 11 of sloping wall 9 sloping by less than the bean static friction angle, so that the beans 2 contacting portion 11 tend to remain stationary and form the groundwork of a bridge structure.

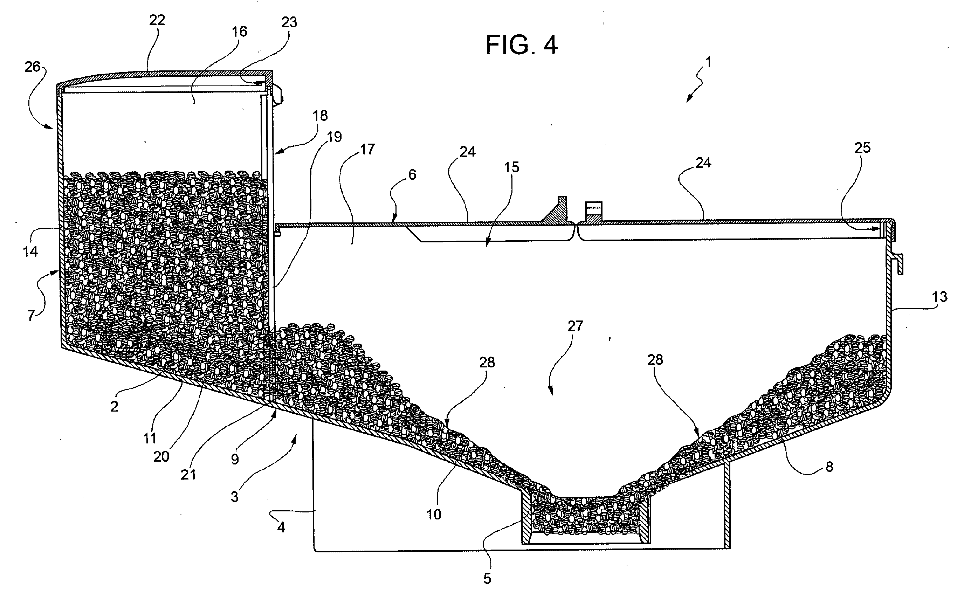

Only when surfaces 28 fall below the free edge 20 of portion 19 of partition 18, when half-chamber 17 is substantially empty (Figure 4), does the mass of beans in half-chamber 16 begin to participate in withdrawal through discharge duct 5, and even then only discontinuously, i.e. as each quantity of beans 2 flows through passage 21, it immediately raises the level of surfaces 28 and restores the balanced condition described at passage 21.

Portion 19 of partition 18 is the only essential element for ensuring the level of beans 2 inside half-chamber 16 only starts to drop when half-chamber 17 is substantially empty, and therefore the level of beans 2 inside half-chamber 16 and visible from the outside through transverse wall 14 constitutes a real visible reserve signal.

In connection with the above, it should be pointed out that hopper 1 operates substantially as described regardless of the slope angles of sloping wall 9, and the presence of turret 26, which simply serves an amplifier of the aforementioned visible reserve signal.

## Claims

1. A coffee bean hopper comprising a bottom funnel (3) terminating in a discharge duct (5); a top wall (6); at least one top fill opening (23); and a lateral wall (7) connecting the top wall (6) to the funnel (3) and comprising at least one transparent portion (14); the coffee bean hopper (1) being **characterized by** also comprising an inner partition (19) extending from the top wall (6) towards the funnel (3) and dividing an inner chamber (15) of the hopper (1) into a first and second half-chamber (16, 17) communicating through a passage (21) between the partition (19) and the funnel (3); said first half-chamber (16) being bounded laterally by the partition (19) and by part of the lateral wall (7) containing said transparent portion (14); the second half-chamber (17) communicating with the discharge duct (5), **characterised in** the first half-chamber (16) communicating with the discharge duct (5) solely via said passage (21) and the second half-chamber (17).

2. A coffee bean hopper as claimed in Claim 1, wherein the passage (21), measured parallel to the partition (19), is shorter in height than the partition (19).

3. A coffee bean hopper as claimed in Claim 1 or 2, wherein the funnel (3) comprises a sloping wall (9) extending under the partition (19) and connected at its bottom end to the discharge duct (5); the sloping wall (9) comprising a first portion (11) extending under the partition (19) and sloping at a first angle, and a second portion (10) connected to the discharge duct (5) and sloping at a second angle steeper than the first angle.

4. A coffee bean hopper as claimed in Claim 3, wherein said first angle is less than a static friction angle of the coffee beans (2).

5. A coffee bean hopper as claimed in Claim 3 or 4, wherein the partition (19) has a free bottom edge (20) parallel to the sloping wall (9).

6. A coffee bean hopper as claimed in Claim 5, wherein the passage (21) is rectangular, and is bounded at the top by the free bottom edge (20) of the partition (19), and at the bottom by the sloping wall (9).

7. A coffee bean hopper as claimed in one of the foregoing Claims, and comprising a turret (26) extending upwards from the top wall (6), and the inner volume of which forms part of said first half-chamber (16); said transparent portion (14) extending upwards above the top wall (6) to define a lateral portion of the turret (26).

8. A coffee bean hopper as claimed in Claim 7, wherein the partition (19) is a bottom portion of a wall (18), an upper portion of which extends upwards above the top wall (6) to define a lateral portion of the turret (26).

9. A coffee bean hopper as claimed in Claim 7 or 8, wherein the turret (26) has a said fill opening (23) at the top.

## Patentansprüche

1. Kaffeebohnentrichter, der einen Bodenschacht (3), der in einem Entleerungsstutzen (5) endet; eine obere Wand (6); wenigstens eine obere Befüllungsöffnung (23); und eine Seitenwand (7), die die obere W and (6) mit dem Schacht (3) verbindet und wenigstens einen lichtdurchlässigen Abschnitt (14) aufweist, umfasst; wobei der Kaffeebohnentrichter (1) außerdem **dadurch gekennzeichnet ist, dass** er eine innere Trennwand (19) umfasst, die sich von der oberen Wand (6) zu dem Schacht (3) erstreckt und eine innere Kammer (15) des Trichters (1) in eine erste und eine zweite Halbkammer (16, 17) unterteilt, die durch einen Durchlass (21) zwischen der Trennwand (19) und dem Schacht (3) kommunizieren; wobei die erste Halbkammer (16) seitlich durch die Trennwand (19) und durch einen Teil der Seitenwand (7), der den lichtdurchlässigen Abschnitt (14) enthält, begrenzt ist; wobei die zweite Halbkammer (17) mit dem Entleerungsstutzen (5) kommuniziert, **dadurch gekennzeichnet, dass** die erste Halbkammer (16) mit dem Entleerungsstutzen (5) ausschließlich über den Durchlass (21) und die zweite Halbkammer (17) kommuniziert.

2. Kaffeebohnentrichter nach Anspruch 1, wobei der Durchlass (21), wenn parallel zu der Trennwand (19) gemessen, eine geringere Höhe besitzt als die Trennwand (19).

3. Kaffeebohnentrichter nach Anspruch 1 oder 2, wobei der Schacht (3) eine schräge Wand (9) umfasst, die sich unter der Trennwand (19) erstreckt und an ihrem unteren Ende mit dem Entleerungsstutzen (5) verbunden ist; wobei die schräge Wand (9) einen ersten Abschnitt (11), der sich unter der Trennwand (19) erstreckt und unter einem ersten Winkel schräg verläuft, und einen zweiten Abschnitt (10), der mit dem Entleerungsstutzen (5) verbunden ist und unter einem zweiten Winkel, der steiler ist als der erste Winkel, schräg verläuft, umfasst.

4. Kaffeebohnentrichter nach Anspruch 3, wobei der erste Winkel kleiner als ein Winkel für die statische Reibung der Kaffeebohnen (2) ist.

5. Kaffeebohnentrichter nach Anspruch 3 oder 4, wobei die Trennwand (19) eine freie untere Kante (20) parallel zu der schrägen Wand (9) besitzt.

6. Kaffeebohnentrichter nach Anspruch 5, wobei der Durchlass (1) rechtwinklig ist und an der Oberseite durch die freie untere Kante (20) der Trennwand (19) und an der Unterseite durch die schräge Wand (9) begrenzt ist.

7. Kaffeebohnentrichter nach einem der vorhergehenden Ansprüche, der ferner einen Turm (26) umfasst, der sich von der oberen Wand (6) nach oben erstreckt und dessen Innenvolumen einen Teil der ersten Halbkammer (16) bildet; wobei sich der lichtdurchlässige Abschnitt (14) nach oben über die obere Wand (6) hinaus erstreckt, um einen Seitenabschnitt des Turms (26) zu definieren.

8. Kaffeebohnentrichter nach Anspruch 7, wobei die Trennwand (19) ein unterer Abschnitt einer Wand (18) ist, wovon sich ein oberer Abschnitt über die obere Wand (6) hinaus nach oben erstreckt, um einen Seitenabschnitt des Turms (26) zu definieren.

9. Kaffeebohnentrichter nach Anspruch 7 oder 8, wobei der Turm (26) an der Oberseite die Befüllungsöffnung (23) aufweist.

## Revendications

1. Trémie de grains de café comprenant un entonnoir inférieur (3) se terminant par un conduit de décharge (5) ; une paroi supérieure (6) ; au moins une ouverture de remplissage supérieure (23) ; et une paroi latérale (7) raccordant la paroi supérieure (6) à l'entonnoir (3) et comprenant au moins une partie transparente (14) ; la trémie de grains de café (1) étant **caractérisée en ce qu'**elle comprend également une séparation interne (19) s'étendant à partir de la paroi supérieure (6) vers l'entonnoir (3) et divisant une chambre interne (15) de la trémie (1) en une première et une seconde demi-chambre (16, 17) communiquant par un passage (21) situé entre la séparation (19) et l'entonnoir (3) ; ladite première demi-chambre (16) étant délimitée latéralement par la séparation (19) et par une partie de la paroi latérale (7) contenant ladite partie transparente (14) ; la seconde demi-chambre (17) communiquant avec le conduit de décharge (5), **caractérisée en ce que** la première demi-chambre (16) communique avec le conduit de décharge (5) uniquement par ledit passage (21) et la seconde demi-chambre (17).

2. Trémie de grains de café selon la revendication 1, dans laquelle le passage (21), mesuré parallèlement à la séparation (19), est plus court en hauteur que la séparation (19).

3. Trémie de grains de café selon la revendication 1 ou 2, dans laquelle l'entonnoir (3) comprend une paroi inclinée (9) s'étendant sous la séparation (19) et raccordée au niveau de son extrémité inférieure au conduit de décharge (5) ; la paroi inclinée (9) comprenant une première partie (11) s'étendant sous la séparation (19) et s'inclinant selon un premier angle, et une seconde partie (10) raccordée au conduit de décharge (5) et s'inclinant selon un second angle plus important que le premier angle.

4. Trémie de grains de café selon la revendication 3, dans laquelle ledit premier angle est inférieur à un angle de friction statique des grains de café (2).

5. Trémie de grains de café selon la revendication 3 ou 4, dans laquelle la séparation (19) a un bord inférieur libre (20) parallèle à la paroi inclinée (9).

6. Trémie de grains de café selon la revendication 5, dans laquelle le passage (21) est rectangulaire, et est délimitée au niveau de la partie supérieure, par le bord inférieur libre (20) de la séparation (19), et au fond par la paroi inclinée (9).

7. Trémie de grains de café selon l'une des revendications précédentes, et comprenant une tourelle (26) s'étendant vers le haut à partir de la paroi supérieure (6), et dont le volume interne fait partie de ladite première demi-chambre (16) ; ladite partie transparente (14) s'étendant vers le haut au-dessus de la paroi supérieure (6) afin de définir une partie latérale de la tourelle (26).

8. Trémie de grains de café selon la revendication 7, dans laquelle la séparation (19) est une partie inférieure d'une paroi (18), dont une partie supérieure s'étend vers le haut au-dessus de la paroi supérieure (6) afin de définir une partie latérale de la tourelle (26).

9. Trémie de grains de café selon la revendication 7 ou 8, dans laquelle la tourelle (26) a ladite ouverture de remplissage (23) au niveau de la partie supérieure.
